# EUROPÄISCHE PATENTSCHRIFT

(11) **EP 2 354 100 B1**
(45) Veröffentlichungstag und Bekanntmachung des Hinweises auf die Patenterteilung: **02.11.2016**
(21) Anmeldenummer: 10196235.5
(22) Anmeldetag: 21.12.2010
(51) Int. Cl.: C02F 11/12, B30B 11/20, B30B 9/12

(54) **Anlage zum Abtrennen von Feststoffen aus wässrigen Suspensionen**
Assembly for separating solids from aqueous suspensions
Installation de séparation de matières solides constituées de suspensions aqueuses

(30) Priorität: 29.12.2009 AT 20462009
(43) Veröffentlichungstag der Anmeldung: 10.08.2011
(73) Patentinhaber: Haider, Reinhold, 5020 Salzburg (AT)
(72) Erfinder: Haider, Reinhold, 5020 Salzburg (AT)
(74) Vertreter: Puchberger, Peter

(56) Entgegenhaltungen:
- WO-A1-95/11076
- WO-A2-91/13672
- DE-A1- 19 934 381
- JP-A- 2004 122 096
- US-A1- 2006 254 331
- US-A1- 2009 166 288

## Beschreibung

Die Erfindung betrifft eine Anlage zum Abtrennen von Feststoffen aus wässrigen Suspensionen, insbesondere kommunalen Abwässern, umfassend einen Schneckenförderer, der zu einer Presseinrichtung mit Auswurf führt, wobei als Presseinrichtung eine Pelletierpresse mit zumindest einem darin angeordneten Pressorgan am oberen Ende des Schneckenförderers angeordnet ist, und wobei die Pelletierpresse einen gelochten Siebmantel aufweist.

Bei einer bekannten Ausbildung dieser Art wird ein von einer horizontalen Abwasserleitung beschickter Siebkorb mit Abwasser durchflutet, aus welchem die Feststoffe mittels eines vertikalen Schneckenförderers herausbefördert werden. Das von Feststoffen befreite Wasser tritt aus dem Siebkorb in ein Auffanggefäß aus und wird von diesem mittels einer Pumpe herausbefördert. Während des vertikalen Förderns werden die Feststoffe zusätzlich noch von abrinnendem Wasser befreit, welches in dem Schneckenförderergehäuse nach unten in den Siebkorb zurück fließt.

Am oberen Ende des Schneckenförderers ist eine Presszone zur mechanischen Entwässerung des Siebgutes vorgesehen, wobei diese Presszone zu einer Auswurfrutsche des gepressten Fördergutes führt. Es wird bei dieser Ausbildung die Ausbildung des oberen Schneckenbereiches so gewählt, dass eine gewisse Pressung des Siebgutes zu einer zusätzlichen Entwässerung führt.

Eine gattungsgemäße Anlage zum Abtrennen von Feststoffen mit einem Schneckenförderer und einer Pelletierpresse ist insbesondere aus der WO 91/13672 A2 bekannt. Weitere gattungsgemäße Anlagen sind aus den Druckschriften DE 199 34 381 A1, US 2009/166288 A1, US 2006/254331 A1 und JP 2004 122096 A bekannt.

Der Erfindung liegt unter anderem die Aufgabe zugrunde, eine Anlage zum Abtrennen von Feststoffen aus Abwässern zu schaffen, welche eine effiziente Pressung und Entwässerung der Feststoffe ermöglicht und gleichzeitig kompakt und einfach in Installation und Wartung ist.

Erfindungsgemäß wird diese Aufgabe durch eine Anlage zum Abtrennen von Feststoffen aus Abwässern gemäß den Ansprüchen 1-4, gelöst.

Durch die Pressorgane wird das Presssgut ausgewalkt und durch die Bohrungen des Pressenringes gedrückt. Damit fallen die aus Abwässern abgeschiedenen Feststoffe in einer kompakten Form an, die direkt einer Weiterbehandlung (z.B. Kompostierung) bzw. einer preiswerten Deponierung (geringeres Gewicht) zugänglich ist.

Vorteilhafterweise kann die Pelletierpresse einen zylindrischen, gelochten Mantel aufweisen (Siebmantel), wobei das bzw. die Pressorgane im Inneren des Siebmantels an dessen Oberfläche abrollende zylindrische Presswalzen sind. Damit wird eine kontinuierliche Pressung erreicht, wobei das Durchpressen der Feststoffe durch den Siebmantel mittels der Rollen eine zusätzliche Entwässerung der Feststoffe im Inneren der Presse ergibt. Alternativ dazu kann die Pelletierpresse einen kegelstumpfförmigen gelochten Mantel aufweisen, wobei das bzw. die Pressorgane im Inneren des Siebmantels eine oder mehrere an dessen Oberfläche abrollende kegelstumpfförmige Presswalzen ist/sind.

Der kegelstumpfförmige Mantel kann sich dabei nach oben oder nach unten hin konisch erweitern. Damit ist es möglich durch axiale Verschiebung des Mantels oder der Pressorgane das Spiel zwischen Mantel und Pressorganen einzustellen um einen verschleißbedingten Abrieb zu kompensieren.

Für eine besonders kompakt zu bauende Anlage kann der zylindrische bzw. kegelstumpfförmige gelochte Mantel direkt auf das obere Ende des Gehäuses des Schneckenförders aufgesetzt werden, wobei der Innenraum des Schneckenförderers direkt in das Innere der Pelletierpresse übergeht. Dadurch erfolgt die Übergabe des zu pelletierenden Gutes aus der Förderschnecke ohne Zwischenschaltung weiterer Förderorgane und einschränkungsfrei, womit auch in energetischer Hinsicht eine vorteilhafte Ausbildung erreicht wird. Zur leichteren Anpassung der Pelletierpresse an die gegebenen Umstände, können in der Pelletierpresse ein bis drei Presswalzen wahlweise abnehmbar bzw. austauschbar vorgesehen sein.

Die Förderschnecke läuft in einem Siebmantel durch welchen die Flüssigkeit und nicht zur Pelletserzeugung geeignete Feinteile durchtreten können. Die Schnecke hat gegenüber dem Siebmantel ein Spiel von 15-20mm. Dieser Bereich wird durch Stahlbürsten, die an der Unterseite der Schnecke in Köchern stecken überbrückt. So wird einerseits verhindert, dass kleine aber harte Feststoffe wie z.b. Splitt zum Verreiben von Schnecke und Siebmantel führen andererseits halten die Borsten der Stahlbürsten den Siebmantel sauber.

Für den Antrieb können die Achsen der Förderschnecke und der Pelletierpresse direkt miteinander gekoppelt sein. Damit ist lediglich ein Motor erforderlich. Für eine, den Anforderungen entsprechende Anpassung der Drehzahl der Förderschnecke und der Pelletierpresse, können die Achsen der Förderschnecke und der Pelletierpresse über ein Zwischengetriebe, vorzugsweise ein Planetengetriebe, miteinander gekoppelt sein. Es können aber auch die Förderschnecke und die Pelletierpresse unabhängig voneinander antreibbar sein, was die Regelbarkeit wesentlich verbessert. Dazu kann der Antriebsmotor für die Pelletierpresse über ein Getriebe mit veränderbarer Übersetzung mit der Achse der Pelletierpresse gekoppelt sein. Um Zerstörungen der Pelletierpresse durch große Feststoffbestandteile, die durch das Pelletiersieb nicht hindurch gehen können, zu verhindern, können die Presswalzen unter Vorspannung vorzugsweise Federvorspannung an den gelochten Mantel der Pelletierpresse anliegen.

Um zu vermeiden, dass langfaserige oder textile Feststoffe sich an der Halterung des der Förderschnecke zugewandten Widerlagers festsetzen können, sind die Halterungen vorzugsweise aus radialen propellerartig ausgebildeten Flachstählen gefertigt, deren der Förderschnecke zugewandten Kanten mit auswechselbaren Schneiden versehen sind, wobei an dem der Pelletierpresse zugewandten Ende der Förderschnecke eine mit den Schneiden der Halterungen zusammenwirkende einstellbare Schneidkante zw. Schneidleiste vorgesehen ist.

Dadurch können abgenützte Schneidkanten leicht ausgetauscht bzw. nachgestellt werden, ohne dass große Teile der Anlage demontiert werden müssen. Auch wird durch diese Austauschbarkeit erreicht, dass schon bei beginnender Abnützung und damit schlechterem Wirkungsgrad auf einfache Weise die Funktionsfähigkeit der Anlage wiederhergestellt werden kann.

Durch die propellerartige Stellung der Halterungen und die miteinander kämmenden Schneidkanten, werden alle von der Schnecke geförderten Feststoffe entsprechend der Fließrichtung unter möglichst geringem Widerstand in die Pelletierpresse gefördert und lange Fasern bzw. Textilien zerkleinert ohne das sie sich an den Halterungen festsetzen können.

Damit Feststoffe (vorzugsweise Eisenmetalle), welche von der Förderschnecke nicht mitgenommen werden sollen, bereits innerhalb des Schneckengehäuses abgeschieden werden, kann zwischen dem unteren Ende der Förderschnecke und dem Boden des Schneckengehäuses ein Abstand freigehalten sein, in welche dornenartigen Fortsätze der Förderschnecke hineinragen. Damit ist ausreichend Platz geschaffen, Feststoffe bereits am Beginn der Förderschnecke abzuscheiden womit verhindert wird, dass einerseits die Schneidkanten am oberen Ende der Förderschnecke bzw. an den Streben des Widerlagers der Pelletierpresse zu stark abgenützt werden und andererseits durch eventuell Mitgeförderte zu große Festkörper der Lochmantel der Pelletierpresse beschädigt wird.

Um zu verhindern, dass Metallteile, insbesondere Eisen innerhalb der Schnecke nach oben gefördert werden, kann der Boden des Schneckengehäuses teilweise oder zur Gänze mit einem Permanentmagneten versehen sein. Damit werden die Metallteile am unteren Ende in dem Hohlraum zwischen Förderschnecke und Boden des Schneckengehäuses festgehalten. Schließlich ist im Bereich des Bodens bzw. der angrenzenden Wandung des Schneckengehäuses eine Putzöffnung angeordnet, durch welche die durch den Magneten abgeschiedene Metallteile bzw. auch Schwerkraft mäßig abgetrennte Feststoffteile entfernt bzw. ausgeräumt werden können.

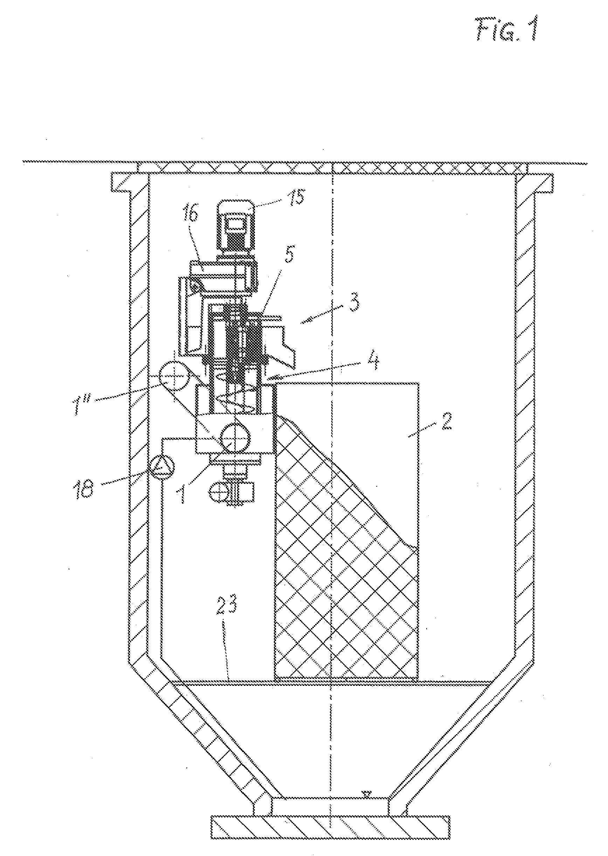

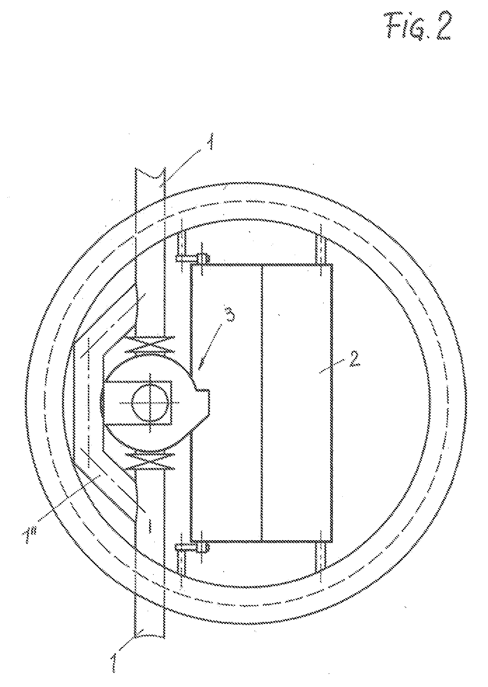

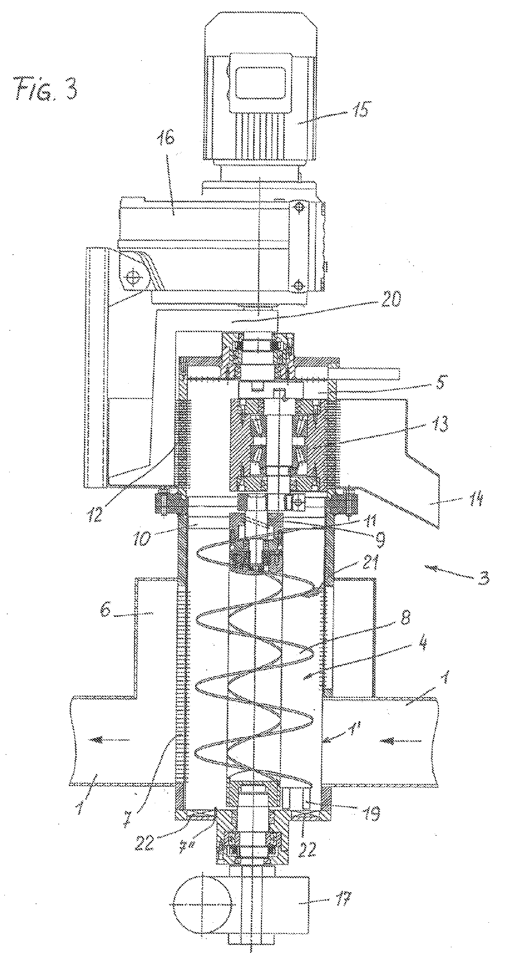

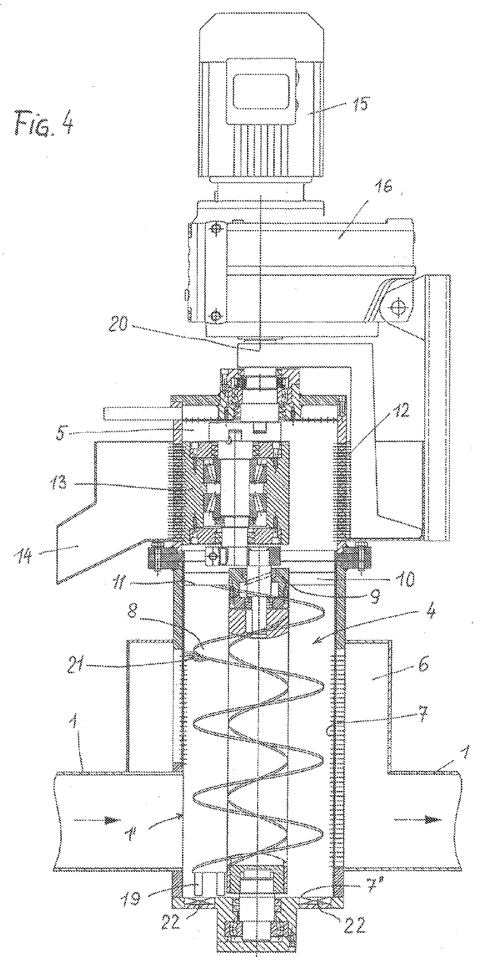

In der Zeichnung ist ein Ausführungsbeispiel des Erfindungsgegenstandes dargestellt. Figur 1 zeigt eine schematische Anordnung der erfindungsgemäßen Anlage mit einem Pelletscontainer im Vertikalschnitt durch letzteren. Fig. 2 veranschaulicht eine Draufsicht auf den Erfindungsgegenstand bei abgenommenem Deckel. Figur 3 gibt im Vertikalschnitt im Detail die erfindungsgemäße Anlage zum Abtrennen von Feststoffen aus Abwässern wieder. Fig. 4 ist eine der Fig. 3 analoge Darstellung einer in Bezug auf den Antrieb abgewandelten Ausführungsform.

Ein Abwasserrohrstrang 1 führt durch einen Betonschacht 2, wobei in den Abwasserstrang 1 ein Pelletiersieb 3 eingebaut ist. Dieses Pelletiersieb 3 besteht aus einem Schneckenförderer 4 und einer Pelletierpresse 5 die in Förderrichtung des Schneckenförderers 4 diesem unmittelbar nachgeschaltet ist.

Dazu führt der Abwasserstrang 1 in einen Auffangraum 6, welcher das untere Ende des Schneckenförderers 4 umgibt. Das Schneckenförderergehäuse 7 weist dabei im Bereich des Abwasserstranges 1 eine Eintrittsöffnung 1' auf, durch welche das Abwasser in das Schneckenförderergehäuse 7 eingeführt wird. Oberhalb dieser Einlassöffnung 1 ist ein Siebmantel 7' vorgesehen, welcher in den Auffangraum 6 einmündet, aus welchem der Wasserstrang 1 rausführt.

In dem Schneckenförderergehäuse 7 ist eine vertikale Förderschnecke 8 angeordnet, welche die mit dem Abwasser mitgeführten Feststoffe nach oben fördert. In dem dargestellten Ausführungsbeispiel reicht das untere Ende der Förderschnecke nicht bis zum Boden 7" des Schneckenförderergehäuse 7. Es wird ein vorgegebener Abstand zwischen dem unteren Ende der Förderschnecke 8 und dem Boden 7" freigehalten um von der Förderschnecke 8 nicht hinauf förderbare schwere Festkörper ablagern zu können, ohne das diese von der Schnecke mitbewegt werden. In dem Zwischenraum zwischen der unteren Kante der Förderschnecke 8 und dem Boden 7" des Schneckenförderergehäuses 7 sind von dem unteren Ende der Förderschnecke 8 ausgehende dornenartige Fortsätze 19 vorgesehen, die bis zum Boden 7" reichen. Damit wird einerseits ein Festbacken der sich am Boden abscheidenden Feststoffe verhindert und andererseits erreicht, dass noch ein Teil der Feststoffe die eventuell von den am Boden sich ablagernden Feststoffen gehalten werden von diesen gelöst und über die Förderschnecke in die Pelletierpresse befördert werden.

Am Boden 7" können Permanentmagnete 22 angeordnet sein, welche metallische Feststoffe, die über einen Magnet erfassbar sind, festgehalten werden. Für diesen Fall ist dann im Boden 7" des Schneckenförderers 4 eine Öffnung vorgesehen, durch welche hindurch die sich am Boden ablagernden Feststoffe und Metallteile herausgezogen werden können.

Die Welle der Förderschnecke 8 ist in einem Widerlager 9 gehalten, wobei das Widerlager 9 über radial verlaufende Streben 10 in dem Förderschneckengehäuse 7 gehalten ist. Das obere Ende der Förderschnecke 8 ist mit Schneidkanten 11 versehen, die mit den unteren Kanten der Streben 10 dahingehend zusammenwirken, dass sie die aufwärts geförderten faserigen Bestandteile scherenartig zerschneiden. In nicht dargestellter Weise können die Schneidkanten sowohl des oberen Endes der Förderschnecke als auch der unteren Kanten der Streben 10 durch auswechselbare Schneidmesser gebildet sein. Dabei ist es von Vorteil, wenn die Streben 10 propellerartig verlaufen, um damit eine bessere Materialführung zu erzielen.

Die Pelletierpresse, die unmittelbar an das obere Ende des Schneckenförderers 4 anschließt, ist durch einen zylindrischen Siebmantel 12 gebildet in welchem Pressorgane 13 angeordnet sind. Die Pressorgane 13 sind als Walzen ausgebildet, die an der Innenseite des Siebmantels 12 abrollen und mittels eines kurbelwellenartigen Exzenters an der Innenseite des Siebmantels 12 entlang geführt werden. In vorliegendem Ausführungsbeispiel ist ein Pressorgan 13 wiedergegeben; es ist ausreichend, nur ein Pressorgan vorzusehen; es können aber auch drei Pressorgane vorgesehen sein. An der Außenseite des Siebmantels 12 ist ein Pelletsauffangbehälter 14 vorgesehen, von welchem dann die Pellets mittels des umlaufenden Schiebers 20 in das Pelletsdepot 2 abgeworfen werden.

Zum Antrieb der Pelletierpresse ist ein Elektromotor 15 und ein Zwischengetriebe 16 vorgesehen. Mit 17 ist das Antriebsaggregat für die Förderschnecke bezeichnet.

Im vorliegenden Ausführungsbeispiel sind für die Förderschnecke und für die Pressorgane der Pelletierpresse zwei getrennte Antriebsorgane vorgesehen, weil damit die Förderleistung und die Pressleistung optimal aufeinander abgestimmt werden können. Es könnte aber auch wie in Fig. 4 dargestellt die Achse der Förderschnecke mit der Antriebsachse der Pelletierpressorgane 13 direkt bzw. über ein Planetenzwischengetriebe gekoppelt sein, womit dann mit einem Antriebsmotor das Auslangen gefunden wird. Über das Planetengetriebe kann die unterschiedliche Drehzahl zwischen Förderschnecke und Pelletierpresse vorgewählt werden. Eine Veränderbarkeit der Umdrehungsgeschwindigkeiten in Abhängigkeit von den jeweils anfallenden Feststoffanteilen ist allerdings bei einer direkten Koppelung bzw. einer Koppelung über ein Planetengetriebe nicht möglich, jedoch mit der wiedergegebenen Zweimotorantriebsvariante.

Im Pelletsdepot 2 ist eine Dräinagepumpe 18 vorgesehen, welche einerseits das durch einen Gitterrost 23 von den Pellets noch abfließende Wasser aus dem Pumpensumpf abzieht bzw. auch zusätzlich noch Wasser aus der Förderschnecke abführt, welches durch das Hochfördern der Feststoffe von der Förderschnecke 8 mitgenommen wird.

Im Betrieb der Vorrichtung laufen beide Antriebsmotoren 15 und 17, wobei das durch die Eintriebsöffnung 1' in das Schneckenförderergehäuse 7 eingebrachte Gemisch aus Wasser und Feststoffen von der Förderschnecke 8 bis in den Bereich des Siebmantels 7' angehoben wird, wo die Hauptmenge des Wasser von den Feststoffen befreit wird und durch den Siebmantel 7' in den Auffangraum 6 und von diesem in die Fortsetzung des Abwasserstranges 1 gelangt. Die Feststoffe werden mittels der Förderschnecke 8 vertikal nach oben gefördert und durch die Schneidkanten 11 am oberen Ende der Förderschnecke 8 und den Schneidkanten an den Streben 10 zerkleinert soweit es sich um Fasern oder Textilstücke handelt. Diese fein zerkleinerten Feststoffe aus den Abwässern werden von der Förderschnecke durch die nachfolgenden Feststoffmengen in den Siebmantel 12 der Pelletierpresse 5 gedrückt, wo sie dann durch die Pressorgane 13 erfasst und durch die Öffnungen des Siebmantels 12 in den Pelletauffangbehälter gepresst werden, von welchem sie dann in das Pelletsdepot 2 abgeworfen werden.

Die Förderschnecke 8 hat einen Abstand vom Siebmantel, der durch an der Unterseite der Schnecke befestigten Drahtbürsten 21 überbrückt wird. Diese Bürsten reinigen den Siebmantel 7'

Bei der Ausführungsvariante gemäß Fig. 4 ist an Stelle eines eigenen Antriebes für den Schneckenförderer 4 eine direkte Verbindung zwischen dem Antrieb 15, 16 der Pelletierpresse 5 und dem Schneckenförderer 4 vorgesehen, wobei in nicht dargestellter Weise ein Planetengetriebe vorgesehen sein kann, mittels welchem eine unterschiedliche Drehzahl zwischen Pelletierpresse und Schneckenförderer eingestellt werden kann.

## Patentansprüche

1. Anlage zum Abtrennen von Feststoffen aus Abwässern, insbesondere kommunalen Abwässern, umfassend einen im Wesentlichen vertikalen Schneckenförderer, der zu einer Presseinrichtung mit Auswurf führt, wobei als Presseinrichtung eine Pelletierpresse (5) mit zumindest einem darin angeordneten Pressorgan (13) unmittelbar am oberen Ende des Schneckenförders (4) angeordnet ist, und wobei die Pelletierpresse (5) einen gelochten Siebmantel (12) aufweist, **dadurch gekennzeichnet, dass** das Pressorgan (13) als Presswalze ausgebildet ist, die mittels eines kurbelwellenartigen Exzenters an der Innenseite des Siebmantels (12) entlang geführt ist und an der inneren Oberfläche des Siebmantels (12) abrollt, und wobei der Siebmantel (12) und die Presswalze (13) eine zylindrische Form oder eine kegelstumpfförmige Form aufweisen.

2. Anlage nach Anspruch 1, **dadurch gekennzeichnet, dass** sich der kegelstumpfförmige gelochte Siebmantel (12) nach oben oder nach unten konisch erweitert.

3. Anlage nach Anspruch 1 oder 2, **dadurch gekennzeichnet, dass** in einem Gehäuse (7) des Schneckenförderers (4) eine vertikale Förderschnecke (8) angeordnet ist.

4. Anlage nach Anspruch 3, **dadurch gekennzeichnet, dass** der zylindrische gelochte Siebmantel (12) oder der kegelstumpfförmige gelochte Mantel direkt auf das obere Ende des Gehäuses (7) des Schneckenförderers (4) aufgesetzt ist, wobei der Innenraum des Schneckenförderers (4) direkt in das Innere der Pelletierpresse (5) übergeht.

5. Anlage nach einem der Ansprüche 2 bis 4, **dadurch gekennzeichnet, dass** in der Pelletierpresse (5) ein bis drei Presswalzen (13) wahlweise abnehmbar bzw. austauschbar vorgesehen sind.

6. Anlage nach einem der Ansprüche 3 bis 5, **dadurch gekennzeichnet, dass** die Achsen der Förderschnecke (8) und der Pelletierpresse (5) direkt miteinander gekoppelt sind.

7. Anlage nach einem der Ansprüche 3 bis 5, **dadurch gekennzeichnet, dass** die Achsen der Förderschnecke (8) und der Pelletierpresse (5) über ein Zwischengetriebe, vorzugsweise ein Planetengetriebe miteinander gekoppelt sind.

8. Anlage nach einem der Ansprüche 1 bis 7, **dadurch gekennzeichnet, dass** die Förderschnecke (8) und die Pelletierpresse (5) unabhängig voneinander antreibbar sind, wobei vorzugsweise der Antriebsmotor (15) für die Pelletierpresse (5) über ein Getriebe (16) mit veränderbarer Übersetzung mit der Achse der Pelletierpresse (5) gekoppelt ist.

9. Anlage nach einem der Ansprüche 1 bis 8, **dadurch gekennzeichnet, dass** die Presswalze(n) (13) unter Vorspannung, vorzugsweise Federvorspannung, an dem gelochten Mantel (12) der Pelletierpresse (5) anliegen.

10. Anlage nach einem der Ansprüche 3 bis 9, **dadurch gekennzeichnet, dass** die Welle der Förderschnecke (8) in einem Widerlager (9) gehalten ist, wobei das Widerlager (9) über radial verlaufende Streben (10) im Gehäuse (7) gehalten ist.

11. Anlage nach Anspruch 10, **dadurch gekennzeichnet, dass** das der Förderschnecke (8) zugewandte Widerlager (9) durch vom Gehäuse (7) ausgehende, Streben (10) gehalten ist, deren der Förderschnecke (8) zugewandten Kanten schneidartig ausgebildet sind, und dass an dem der Pelletierpresse (5) zugewandten Ende der Förderschnecke (8) eine mit den schneidartigen Kanten der Streben (10) zusammenwirkende Schneidkante bzw. Schneidleiste (11) vorgesehen ist.

12. Anlage nach Anspruch 11, **dadurch gekennzeichnet, dass** die radialen Streben (10) des der Förderschnecke zugewandten Widerlagers (9) propellerartig schräg gestellte Flachstähle sind, an deren der Förderschnecke (8) zugewandten Seite einstell- und austauschbare, mit dem Messer der Förderschnecke (8) kämmende Messer angeordnet sind.

13. Anlage nach einem der Ansprüche 3 bis 12, **dadurch gekennzeichnet, dass** zwischen dem unteren Ende der Förderschnecke (8) und dem Boden des Schneckengehäuses (7") ein Abstand freigehalten ist, in welchen dornenartige Fortsätze (19) der Förderschnecke (8) hineinragen.

14. Anlage nach einem der Ansprüche 3 bis 12, **dadurch gekennzeichnet, dass** der Boden (7") des Schneckengehäuses teilweise oder zur Gänze mit einem Permanentmagnet (22) versehen ist.

## Claims

1. A plant for separating solids from waste water, in particular municipal waste water, comprising a substantially vertical screw conveyor that leads to a pressing device with a discharge, wherein a pelleting press (5) as a pressing device having at least one pressing element (13) arranged therein is directly arranged at the upper end of the screw conveyor (4), and wherein the pelleting press (5) has a perforated sieve sheath (12), **characterized in that** the pressing element (13) is formed as a pressing roller which is guided along the inner side of the sieve sheath (12) by means of crankshaft-like eccentric and rolls on the inner surface of the sieve sheath (12), and wherein the sieve sheath (12) and the pressing roller (13) have a cylindrical shape or a truncated-cone shape.

2. The plant according to claim 1, **characterized in that** the truncated cone-shaped perforated sieve sheath (12) expands upwardly or downwardly in a conical manner.

3. The plant according to claim 1 or 2, **characterized in that** in a housing (7) of the screw conveyor (4), a vertical conveying screw (8) is arranged.

4. The plant according to claim 3, **characterized in that** the cylindrical perforated sieve sheath (12) or the truncated cone-shaped perforated sheath is directly fitted onto the upper end of the housing (7) of the screw conveyor (4), wherein the interior of the screw conveyor (4) directly transitions into the inside of the pelleting press (5).

5. The plant according to any one of claims 2 to 4, **characterized in that** one to three pressing rollers (13) are provided in the pelleting press (5) in a selectively removable respectively interchangeable manner.

6. The plant according to any one of claims 3 to 5, **characterized in that** the axles of the conveying screw (8) and the pelleting press (5) are directly coupled to one another.

7. The plant according to any one of claims 3 to 5, **characterized in that** the axles of the conveyor screw (8) and the pelleting press (5) are directly coupled to one another via an intermediate gear, preferably a planetary gear.

8. The plant according to any one of claims 1 to 7, **characterized in that** the conveying screw (8) and the pelleting press (5) can be driven independently of one another, wherein preferably the drive motor (15) for the pelleting press (5) is coupled to the axle of the pelleting press (5) via gear (16) with variable transmission ratio.

9. The plant according to any one of claims 1 to 8, **characterized in that** the pressing roller(s) (13) rest(s) under preload, preferably spring preload, against the perforated sheath (12) of the pelleting press (5).

10. The plant according to any one of claims 3 to 9, **characterized in that** the shaft of the conveying screw (8) is supported in a counter bearing (9), wherein the counter bearing (9) is supported in the housing (7) via radially running struts (10).

11. The plant according to claim 10, **characterized in that** the counter bearing (9) facing towards the conveying screw (8) is supported by struts (10) which extend from the housing (7) and the edges thereof which face towards the conveying screw (8) are formed in a cutter-like manner, and that at the end of the conveying screw (8), which end faces towards the pelleting press (5), a cutting edge respectively cutting bar (11) is provided which interacts with the cutter-like edges of the struts (10).

12. The plant according to claim 11, **characterized in that** the radial struts (10) of the counter bearing (9) facing towards the conveying screw are flat steel bars which are arranged inclined in a propeller-like manner, on the side thereof facing towards the conveying screw (8) there are arranged adjustable and interchangeable blades which mesh with the blade of the conveyor screw (8).

13. The plant according to any one of claims 3 to 12, **characterized in that** a spacing, into which thorn-like projections (19) of the conveying screw (8) protrude, is kept between the lower end of the conveying screw (8) and the bottom of the screw housing (7'').

14. The plant according to any one of claims 3 to 12, **characterized in that** the bottom (7'') of the screw housing is partly or entirely provided with a permanent magnet (22).

## Revendications

1. Installation destinée à séparer des matières solides d'eaux usées, notamment d'eaux usées communales, comprenant un convoyeur à vis sensiblement vertical qui mène vers un système de pressage avec éjection, en tant que système de pressage, une presse à pellets (5) avec au moins un organe de pressage (13) placé dans cette dernière étant placée directement sur l'extrémité supérieure du convoyeur à vis (4) et la presse à pellets (5) comportant un enveloppe de tamisage (12) perforée, **caractérisée en ce que** l'organe de pressage (13) est conçu en tant que cylindre presseur, qui à l'aide d'un excentrique de type vilebrequin est guidé le long de la face intérieure de l'enveloppe de tamisage (12) et se déroule sur la face intérieure de l'enveloppe de tamisage (12) et l'enveloppe de tamisage (12) et le cylindre presseur (13) présentant une forme cylindrique ou une forme tronconique.

2. Installation selon la revendication 1, **caractérisée en ce que** l'enveloppe de tamisage (12) de forme tronconique s'évase en cône vers le haut ou vers le bas.

3. Installation selon la revendication 1 ou 2, **caractérisée en ce que** dans un carter (7) du convoyeur à vis (4) est placée une vis de convoyage (8) verticale.

4. Installation selon la revendication 3, **caractérisée en ce que** l'enveloppe de tamisage (12) perforée ou l'enveloppe perforée de forme tronconique est posée directement sur l'extrémité supérieure du carter (7) du convoyeur à vis (4), l'espace intérieur du convoyeur à vis (4) passant directement dans l'intérieur de la presse à pellets (5).

5. Installation selon l'une quelconque des revendications 2 à 4, **caractérisée en ce que** dans la presse à pellets (5), de un à trois cylindres de pressage (13) sont prévus de manière amovible resp. interchangeable au choix.

6. Installation selon l'une quelconque des revendications 3 à 5, **caractérisée en ce que** les axes de la vis de convoyage (8) et de la presse à pellets (5) sont directement accouplés l'un avec l'autre.

7. Installation selon l'une quelconque des revendications 3 à 5, **caractérisée en ce que** les axes de la vis de convoyage (8) et de la presse à pellets (5) sont accouplés l'un avec l'autre par l'intermédiaire d'une transmission intermédiaire, de préférence d'un engrenage planétaire.

8. Installation selon l'une quelconque des revendications 1 à 7, **caractérisée en ce que** la vis de convoyage (8) et la presse à pellets (5) peuvent être entraînées indépendamment l'une de l'autre, de préférence le moteur d'entraînement (15) de la presse à pellets (5) étant accouplé avec la presse à pellets (5) par l'intermédiaire d'une transmission (16) à multiplication variable.

9. Installation selon l'une quelconque des revendications 1 à 8, **caractérisée en ce que** le(s) cylindre(s) de pressage (13) s'appuie(nt) sous précontrainte, de préférence sous la précontrainte d'un ressort sur l'enveloppe perforée (12) de la presse à pellets (5).

10. Installation selon l'une quelconque des revendications 3 à 9, **caractérisée en ce que** l'arbre de la vis de convoyage (8) est maintenu dans un aboutement (9), l'aboutement (9) étant maintenu dans le carter (7) par l'intermédiaire d'entretoises (10) s'étendant en direction radiale.

11. Installation selon la revendication 10, caractérisée en ce l'aboutement (9) qui fait face à la vis de convoyage (8) est maintenu par des entretoises (10) partant du carter (7) dont les arêtes qui font face à la vis de convoyage (8) sont conçues de manière semblable à des lames et en ce que sur l'extrémité de la vis de convoyage (8) qui fait face à la presse à pellets (5), il est prévu une arête de coupe resp. baguette de coupe (11) coopérant avec les arêtes semblables à des lames des entretoises (10).

12. Installation selon la revendication 11, **caractérisée en ce que** les entretoises (10) radiales de l'aboutement (9) qui fait face à la vis de convoyage sont des aciers plats posés en inclinaison à la manière d'hélices, sur le côté qui fait face à la vis de convoyage (8) desquels sont placées des lames réglables et interchangeables qui s'engrènent avec la lame de la vis de convoyage (8).

13. Installation selon l'une quelconque des revendications 3 à 12, **caractérisée en ce qu'**entre l'extrémité inférieure de la vis de convoyage (8) et le fond du carter de la vis (7'') est laissé libre un écart dans lequel saillissent des prolongements (19) de type tourillons de la vis de convoyage (8).

14. Installation selon l'une quelconque des revendications 3 à 12, **caractérisée en ce que** le fond (7'') du carter de la vis est muni en partie ou en totalité d'un aimant permanent (22).
